# EUROPÄISCHE PATENTSCHRIFT

(11) **EP 1 493 936 B1**
(45) Veröffentlichungstag und Bekanntmachung des Hinweises auf die Patenterteilung: **23.11.2005**
(21) Anmeldenummer: 03015180.7
(22) Anmeldetag: 04.07.2003
(51) Int. Cl.: F16D 35/02

(54) **Aktuator für Viskosekupplung mit magnetischer Ölumlaufventilansteuerung im Kupplungsschaft**
Actuator for viscous clutch with oil valve magnetic control in clutch shaft
Dispositif de commande pour embrayage à fluide visquex avec commande de soupape d'huile magnétique dans l'arbre d'embrayage

(43) Veröffentlichungstag der Anmeldung: 05.01.2005
(73) Patentinhaber: BorgWarner Inc., Auburn Hills, MI 48326-2872 (US)
(72) Erfinder: Tilly, Christian, 88690 Uhldingen-Mühlhofen (DE)
(74) Vertreter: Pautex Schneider, Nicole Véronique

(56) Entgegenhaltungen:
- EP-A- 0 130 024
- EP-A- 0 870 943
- EP-A- 1 120 578
- US-A- 4 305 491

## Beschreibung

Die vorliegende Erfindung betrifft einen Viskosekupplung nach dem Oberbegriff des Anspruchs 1.

### STAND DER TECHNIK

Bei Viskosekupplungen wird das Drehmoment einer Rotationsquelle über, in geringem Abstand und im wesentlichen parallel zueinander, einen Scherungsbereich einschliessenden Scheiben von der Rotationsquelle auf ein mitzunehmendes Element übertragen, wobei beispielweise die Menge an Scherungsflüssigkeit, die zwischen die rotierenden Scheiben in den Scherungsbereich eingebracht wird, den Drehmomentübertragungsgrad zwischen einem unteren Schwellwert, beispielsweise 10% bis nahezu vollständig steuert.

Die Steuerung der Menge an Scherungsflüssigkeit, beispielsweise Silikonöl, die in den Scherungsbereich eingebracht wird, geschieht durch ein Ventil, das mittels eines Aktuators geöffnet und geschlossen werden kann.

Die europäischen Patentanmeldung 1 248 007 beschreibt einen derartigen Aktuator, der ausserhalb des Kupplungs-Schafts um diesen herum angeordnet ist. Eine derartige Bauweise hat bestimme Vorteile, kann jedoch noch weiter optimalisiert werden.

Da der Aktuator stationär sein soll und der Kupplungs-Schaft rotiert, muss eine entsprechend dimensioniertes Kugellager benützt werden, dessen Innendurchmesser nach der deutschen Patentanmeldung, dem Aussendurchmesser des Schafts entspricht. Für jede Schaftgrösse muss daher ein angepasstes Kugellager eingesetzt und vor allem bereitgehalten werden.

Ferner erfordert die Lösung nach der deutschen Patentanmeldung eine bestimmte Menge an Isoliermaterial und es wird daher eine Lösung gesucht um Isoliermaterial nicht nur zu sparen sondern überhaupt ohne Isoliermaterial auszukommen.

Ganz allgemein sollte auch die Komplexität der Kupplung verringert werden.

EP-A-1120578 und EP-A-0870943 zeigen Viskosekupplungen, bei denen ein ausserhalb des Kupplungsschafts liegender Magnet ein Stange axial bzw rotativ antreibt, die durch den Kupplungsschaft axial durchgehend, Kontrollelement zur Regelung des Durchflusses der Scherungsflüssigkeit bewegt.

### AUFGABE DER ERFINDUNG

Es ist daher Aufgabe der vorliegenden Erfindung, einen Aktuator für den Scherungsflüssigkeitsumlauf beispielsweise einer Viskosekupplung bereitzustellen, bei dem die Grösse der verwendeten Einzelteile wesentlich verkleinert ist um eine Verkleinerung der gesamten Viskosekupplung zu ermöglichen.

Diese Aufgabe wird erfindungsgemäss durch die Merkmale des kennzeichnenden Teils des Anspruchs 1 gelöst.

Weitere Aspekte und Vorteile ergeben sich aus den Unteransprüchen.

### KURZBESCHREIBUNG DER ERFINDUNG

Die vorliegende Erfindung betrifft eine Viskosekupplung mit einem Aktuator zum Ansteuern beispielsweise eines Ventils zur Steuerung des Öldurchsatzes der Viskosekupplung, wobei dieser Aktuator funktionell mit einem rotierenden Teil der Viskosekupplung, wie beispielweise dem Kupplungs-Schaft, zusammenarbeitet, und wobei der Aktuator einen Primäraktuator aufweist, der mittels eines, eine relative Verdrehung des Aktuators zum Kupplungs-Schaft der dgl. gestattenden Lagers bezüglich des Kupplungs-Schafts oder dgl. an diesem gelagert ist, dadurch gekennzeichnet, dass der Kupplungs-Schaft oder dgl. einen hohlzylindrischen Bereich aufweist und der Primäraktuator innerhalb dieses hohlzylindrischen Bereichs angeordnet ist, wobei Aktuator und Kupplungs-Schaft oder dgl. Mittel aufweisen um die Steuertätigkeit des Primäraktuators von innerhalb des hohlzylindrischen Bereichs nach aussen mitzuteilen, und wobei eine Hülse vorgesehen ist, welche durch die Wirkung des Aktuators ausserhalb des Kupplungs-schafts auf diesen axial gleitend, verschiebbar ist.

Die Anordnung des Primäraktuators innerhalb des Kupplungs-Schafts erlaubt es den Aktuator wesentlich kleiner auszuführen als wenn dieser um den Kupplungs-Schaft herum angeordnet wäre. Es kann auch eine Standard Aktuatorgrösse verwendet werden, da die Innenbohrung des Kupplungs-Schafts unabhängig von dessen Aussendurchmesser immer gleich gehalten werden kann. Die Kugel- oder Rolllager zur Relativlagerung zwischen Spulenachse und Kupplungs-Schaft können weitaus kleiner gemacht werden als das Kugellager der deutschen Patentanmeldung, in der ein Kugellager ausserhalb des Kupplungs-Schafts angeordnet ist.

Entsprechend einer Ausführungsart umfasst der Primäraktuator eine Magnetspule. Mit dieser Magnetspule kann ein magnetisches Feld erzeugt werden, mit Hilfe dessen eine mechanische Komponente in verschiedenen Positionen bringbar ist. Diese unterschiedlichen Positionen können auf ein Ventil übertragen werden, das hiermit zwischen Offen und Geschlossen steuerbar ist.

Bei Verwendung der Viskosekupplung entsprechend der Erfindung kann das vom Aktuator gesteuerte Ventil zur Steuerung der Durchflussmenge an Scherungsflüssigkeit, wie Silikonöl, eingesetzt werden.

Hierzu ist es vorteilhaft, wenn Bereiche des Kupplungs-Schafts und die bewegliche Hülse Teil des Magnetkreises der Magnetspule sind.

Entsprechend einer Ausführungsart der Erfindung kann die Magnetspule auf einer stationären Spulenachse gelagert sein. Die Aussenkontur der Spulenachse trägt hierbei die Innenkontur eines Kugellagers, welches mit seiner eigener Aussenkontur an der Innenfläche des hohlzylindrischen Kupplungs-Schafts anliegt, um derart eine relative Rotation zwischen Spulenachse und Kupplungs-Schaft zu gewährleisten.

In dieser Ausführungsart besteht die Wand des hohlzylindrischen Bereichs des Kupplungs-Schafts aus einem hohlzylindrischen Hauptschaft aus ferromagnetischem Material, einem topfförmigen Schaft-Frontteil aus ferromagnetischem Material und einem unmagnetischen Zwischenteil, welcher axial zwischen Hauptteil und Schaffrontteil angeordnet ist. Hierdurch wird ein Hohlzylinder aus ferromagnetischem Material gebildet, der mehr oder weniger in der Mitte seiner axialen Länge einen unmagnetischen Sektor aufweist, wobei die besagte Hülse ausserhalb dieses Hohlzylinders derart angeordnet ist, dass sie den unmagnetischen Teil überspannt wobei sie in einer Endposition eine starke Überlappung mit einem der beiden ferromagnetischen Teile und eine schwache oder keine Überlappung mit dem anderen der beiden ferromagnetischen Teile aufweist, wohingegen sie in der anderen Endposition mit beiden ferromagnetischen Teilen des Kupplungs-Schafts im wesentlichen gleich starke Überlappungen aufweist.

Haupt-Schaft, Zwischenteil und Schaft-Frontteil können miteinander verschraubt oder verschweisst sein.

Entsprechend einer anderen Ausführungsart der Erfindung kann der Aktuator so ausgebildet sein, dass die bewegliche Komponente aus einem topfförmigen, mit seinem hülsenförmigen Bereich den zylindrischen Teil des Kupplungs-Schafts umschliessenden Schaft-Frontteil gebildet ist.

Hierbei kann der Topfförmige Frontteil des Kupplungs-Schafts quasi teleskopisch auf dem Kupplungs-Schaft verschoben werden, und diese Verschiebung kann als Steuerbewegung beispielsweise des Öldurchflussventils einer Viskosekupplung ausgenutzt werden

Im Rahmen der beiden beschriebenen Ausführungsarten der Erfindung können die bewegliche Komponenten bzw. die Hülsen mittels einer Feder in eine ihrer zwei Endpositionen vorgespannt sein.

### KURZE BESCHREIBUNG DER ZEICHNUNG

Die Erfindung wird nun an Hand der Zeichnung näher erläutert, wobei:
Fig. 1 ein erstes Ausführungsbeispiel der Erfindung,
Fig. 2 ein anderes Ausführungsbeispiel der Erfindung, und
Fig. 3 eine Viskosekupplung mit erfindungsgemässem Aktuator zeigen

### DETAILLIERTE BESCHREIBUNG DER ERFINDUNG

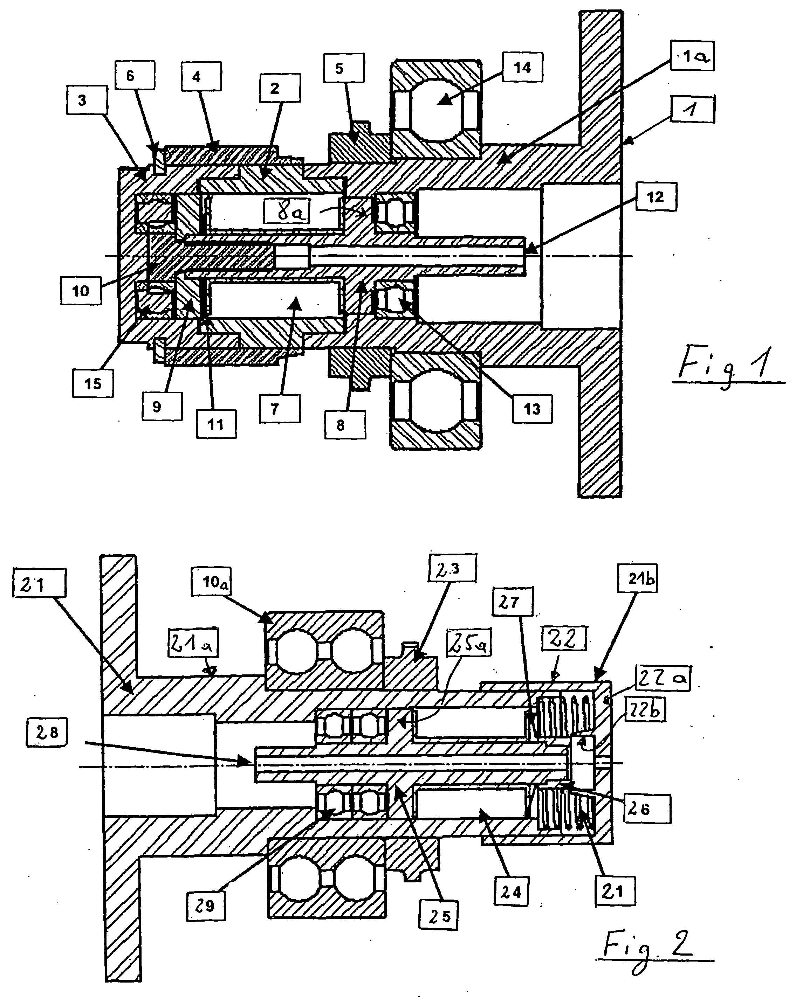

In Fig. 1 ist eine Untereinheit einer Viskosekupplung dargestellt. Der Eingangs-Schaft 1 der Viskosekupplung ist über ein Kugel- oder Rollenlager 14 in einem nicht dargestellten Kupplungsgehäuses gelagert und kann frei zum Kupplungsgehäuse rotieren.(, wenn er von einer auf Rotation mit ihm verbundenen nicht dargestellten Kupplungsscheibe in Rotation versetzt wird.)

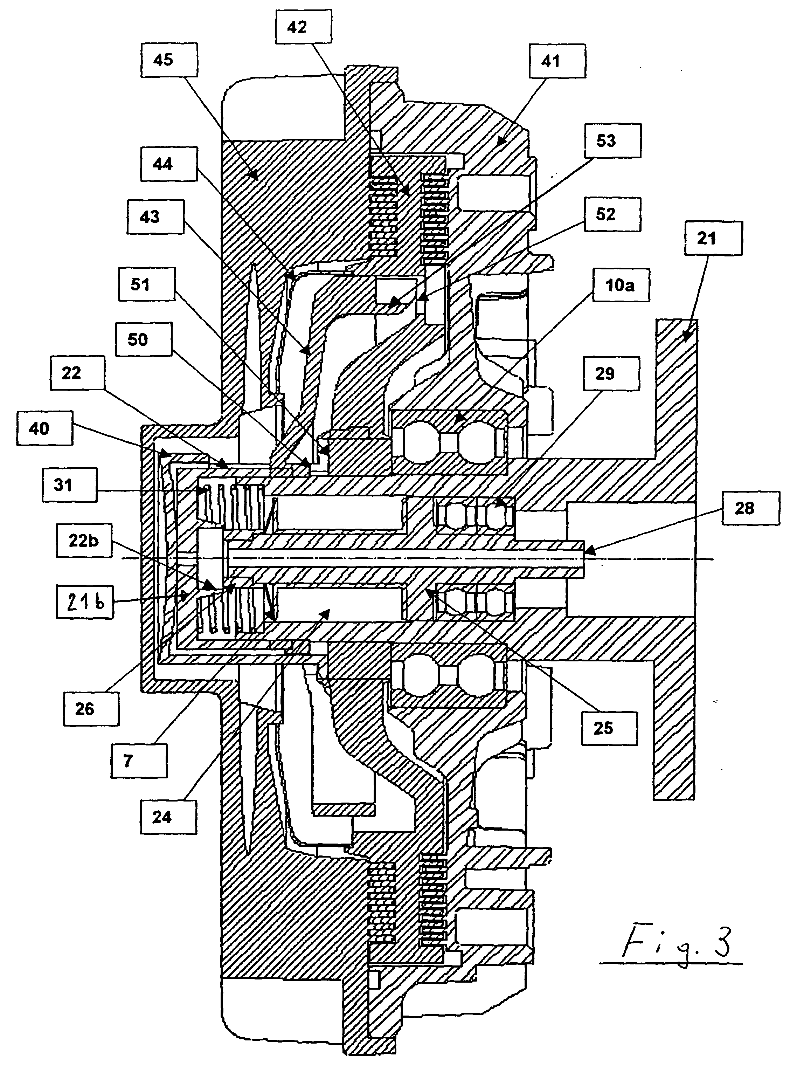

Der Schaft 1 ist, wie in Fig. 3 dargestellt, mit einer Primärscheibe 42 drehfest verbunden welche in ihrem radial äusseren Bereich eine Labyrinthformation aufweist, die zusammen mit einer gegenüberliegenden ähnlichen Formation die sogenannte Scherungszone der Viskosekupplung bildet in die eine Scherungsflüssigkeit eingebracht wird, um damit von der angetriebenen Primärscheibe die Rotation auf die Kupplungsscheibe 45 (dies ist in Fig. 3 der Kupplungsdeckel) zu übertragen, wobei die Menge an Scherungsflüssigkeit ausschlaggebend ist für das Verhältnis der Geschwindigkeit der angetriebenen Primärscheibe zur mitgenommenen Kupplungsscheibe. Dieses Verhältnis kann zwischen einem vorwählbare Mindestwert, z.B. 10% bis zu nahezu 100% variieren, wobei die Variation über die Menge des zwischen Kupplungsscheibe und Primärscheibe eingebrachten Öls gesteuert werden kann.

Der Kupplungs-Schaft 1 weist einen Haupt-Schaft 1a, einen Zwischenteil 2 und einen Frontteil 3 auf. Haupt-Schaft 1 und Frontteil 3 sind aus einem ferromagnetischen Material gefertigt, wohingegen der Zwischenteil 2 unmagnetisch ist. Der Grund hierfür wird weiter unten erläutert.

Ausserhalb des Kupplungs-Schafts ist eine Hülse 4 angeordnet, welche am Kupplungs-Schaft zwischen einem Anschlag 6 und einem ferromagnetischen Ring 5 axial verschiebbar ist.

Innerhalb des hohlzylindrischen Kupplungs-Schafts ist eine Spulenachse 8 angeordnet, die etwa in ihrer axialen Mitte einen radial vergrösserten Bereich 8a aufweist, dessen Aussendurchmesser ein wenig kleiner ist als der Innendurchmesser des hohlzylindrischen Kupplungs-Schafts, sodass die Spulenachse, welche durch nicht dargestellte Mittel gegen Rotation in ihrer Lage gesichert ist, eine Rotation des Kupplungs-Schafts ermöglicht. Um diese Rotation praktisch reibungslos erfolgen zu lassen, ist neben dem radial vergrösserten Bereich 8a ein Kugellager 13 oder dgl. vorgesehen, dessen Innenkontur auf der Aussenfläche der Spulenachse 8, und dessen Aussenkontur an der Innenfläche des hohlzylindrischen Kupplungs-Schafts anliegt.

Auf der dem Kugellager 13 gegenüberliegenden Seite des radial vergrösserten Bereichs 8a der Spulenachse 8 ist eine Spule 7 angeordnet, welche die Spulenachse umgibt.

Die Spulenachse ist auf der Seite der Spule etwas länger als die Spule und trägt einen ebenfalls stationären magnetischen Flussring 9, sodass die Spule 7 im Schnitt vollständig umschlossen ist, und zwar von radial innen ausgehend und im Uhrzeigersinn fortschreitend, von der Spulenachse 8, dem radial erweiterten Bereich 8a der Spulenachse 8, dem Zwischenteil 2 des Kupplungs-Schafts 1 und dem Flussring 9.

Alle diese Teile mit Ausnahme des Zwischenteils 2 sind ferromagnetisch, nur der Zwischenteil 2 ist unmagnetisch.

Bei Erregung der Spule stellt sich daher ein Magnetfeld ein welches, von der Spulenachse 8 ausgehend einerseits über den radial vergrösserten Bereich 8a der Spulenachse in den Haupt-Schaft 1a und den Ring 5, und anderseits über den Flussring 9 in den Frontteil 3 des Kupplungs-Schafts eindringt.

Hierdurch entsteht ein axialer magnetischer Spalt zwischen dem Ring 5 und der Hülse, wobei die vom Magnetfeld erzeugte Kraft die Hülse in Richtung auf den Ring 5 zu verschieben sucht.

Eine nicht dargestellte, beispielsweise als Spiralfeder ausgeführte Rückholeinrichtung ist vorgesehen, welche die Hülse in die dargestellte Lage vorspannt, aus der sie dann bei Anlegen eines elektrischen Stroms bestimmter Stärke durch die Windungen der Spule 7 gegen die Kraft der Rückholvorrichtung in die andere, am Ring 5 anliegenden Lage verschoben werden kann.

Ein Bolzen 10 ist in die hohle Spulenachse derart eingeschraubt, dass er die Spule 7 zwischen dem radial vergrösserten Bereich 8a der Spulenachse 8 und der magnetischen Flussscheibe axial einspannt.

Um eine exakte, über den Umfang des Flussrings 9 konstante Toleranz zwischen der Umfangsfläche des Flussrings und der Innenfläche des Frontteils 3 des Kupplungs-Schafts zu gewährleisten, kann, wie dargestellt, ein zweites Kugellager 15 verwendet werden.

Um jegliche Vibrationen zu vermeiden, kann, wie dargestellt ein Belleville Ring 11 zwischen den Flussring 9 und die Spule 7 eingesetzt werden.

Von der bisherigen Beschreibung der Fig. 1 ist ersichtlich, dass der Kupplungs-Schaft 1 eine Hülse 4 trägt, die durch Anlegen eines elektrischen Stroms axial verschoben werden kann.

Diese Axialverschiebung kann nun in nicht dargestellter Weise ein Ventil steuern, mit Hilfe dessen die Menge an Scherungsflüssigkeit zwischen der oben erwähnten Primärscheibe und der Kupplungsscheibe eingestellt werden kann um den Drehmomentübertragungsgrad zwischen diesen beiden Scheiben zu steuern.

Die Fig. 2 zeigt ein anderes Ausführungsbeispiel der Erfindung, welches zur Darstellungsweise in der Fig 1, seitenverkehrt illustriert ist.

Ein hohlzylindrischer Kupplungs-Schaft 21 ist mittels eines Zwillingskugellagers 10a In einem nicht dargestellten Gehäuse beispielsweise einer Viskosekupplung gelagert.

Im Unterschied zur Fig. 1 besteht der Kupplungs-Schaft 21 nur aus zwei Teilen, nämlich dem Haupt-Schaft 21a und dem Frontteil 21b.

Beide Teile des Kupplungs-Schafts sind aus ferromagnetischem Material gefertigt, wobei der Frontteil 21b Topfförmige Gestalt hat, deren zylindrischer Teil 22 teleskopartig auf den Haupt-Schaft 21a aufgesetzt und axial auf diesem verschiebbar ist.

Ähnlich wie im ersten Ausführungsbeispiel ist der Kupplungs-Schaft hohl und nimmt in sich eine durch ein Zwillingskugellager 29 innerhalb des Kupplungs-Schafts relativ zum Kupplungs-Schaft auf Rotation gelagerte Spulenachse 25 auf.

Die Spulenachse trägt eine Spule 24, welche durch eine Bellevillefeder 27 fest in ihrer Lage gehalten wird, und welche einen weiter unten beschriebenen Magnetkreis erzeugen kann.

Der Frontteil 21b des Kupplungs-Schafts, oder auch, in Ahnlehnung an das erste Ausführungsbeispiel: die Hülse 22 ist mittels einer Spiralfeder 31 in eine den Haupt-Schaft 21 am stärksten verlängernde Endposition gespannt, wobei der Frontteil 21b hierbei durch einen nicht dargestellten Anschlag vom Herbfallen vom Schaft gesichert ist.

Anders als im Ausführungsbeispiel 1 wird der magnetische Spalt nicht axial zwischen der Hülse 22 und dem Ring 23 gebildet, da beide Elemente auf dem ebenfalls ferromagnetischen Schaft 21a anliegen, sondern zwischen einem stationären Magnetpol 26, der ringförmig die Spulenachse umschliesst, und einer ringkonusförmigen Zentralhülse 22b, die mit dem bodenförmigen Teil 22a des Frontteils 21b aus einem Stück geformt oder mit diesem zumindest verschweisst ist, und sich axial auf den stationären Magnetpol hin erstreckt.

Der Magnetkreis der Spule 24 erstreckt sich also, von der Spulenachse 25 ausgehend und im Uhrzeigersinn fortschreitend durch einen radial vergrösserten Bereich 25a der Spulenachse 25 den Kupplungs-Schaft, die Hülse 22, den Bodenteil 22a, die ringkonischförmige Zentralhülse 22b, den stationären Magnetpol 26 zurück in die Spulenachse.

Der magnetische Spalt wird zwischen dem stationären Magnetpol 26 und der Zentralhülse 22b gebildet, wobei bei maximal geöffnetem Spalt der dünne Rand der Zentralhülse 22b einen nur geringen radialen Abstand (z.B. 0.3mm) vom stationären Magnetpol hat, und bei Anlegen eines elektrischen Stroms eine Kraft auftritt, die den Frontteil 21b in Richtung gegen die Kraft der Feder 31 anzieht, die den magnetischen Querschnitt des Spalts, bei teleskopischem Aufschieben der Zentralhülse auf den stationären Magnetpol wegen des konischen Verlaufs der Zentralhülse vergrössert.

Überdies wird der bodenförmige Teil 22a des Frontteils 21b vom stationären Magnetpol 26 angezogen

Die Bewegung der Hülse 22 oder des Frontteils 21b kann hier, wie die Bewegung der Hülse 4 im ersten Ausführungsbeispiel zur Steuerung eines Ventils zur Durchsatzsteuerung der Scherungsflüssigkeit einer Viskosekupplung eingesetzt werden.

Beiden beschriebenen Ausführungsarten der Erfindung ist es gemeinsam, dass die Spulen 7 und 24 mittels elektrischen Leitungen betrieben werden können, die in nicht dargestellter Weise von der Spule direkt in die Zentralbohrung der Spulenachse geführt sind und dieser axial folgen und zentral am Ende der Spulenachse bei 12 (in Fig. 1) bzw. bei 28 (in Fig. 2) aus der Spulenachse austreten und daher sehr leicht zu montieren und zu Handhaben sind.

Die Spulenachse 8 bzw. 25 sind in ihrer Lage mittels nicht dargestellten Verdrehsicherungen fixiert.

Die Fig. 3 zeigt einen erfindungsgemässen Aktuator in einer Viskosekupplung zur Steuerung eines Kühlventilators eines Lastkraftwagens.

Hierbei ist der Aktuator identisch mit demjenigen der Fig. 2. und die Bezugszeichen 21 bis 31 sind identisch mit denjenigen der Fig. 2.

Der Kupplungs-Schaft 21 ist über das Kugel- oder Rollenlager 10a mit dem Gehäuse 41 der Viskosekupplung drehbar verbunden. Ferner ist der Kupplungs-Schaft 21 mit einer Primärscheibe 42, auch Rotor genannt, starr verbunden. Der Rotor 42 weist in seinem radial äusseren Bereich auf beiden Seiten eine labyrinthförmige Formation auf, welche in entsprechende ähnliche labyrinthförmige Formation einerseits im Kupplungsdeckel 45 und im Gehäuse 41 eng aber berührungslos eingreifen. Durch Einbringen von Scherungsflüssigkeit, beispielsweise viskosem Silikonöl, in diesen Labyrinthbereich, wird die Rotation des Rotors 42 gleichzeitig auf der einen Seite auf den Kupplungsdeckel 45 also auch auf der anderen Seite auf das Gehäuse 41 übertragen, wobei die Menge an Öl ausschlaggebend ist für den Wirkungsgrad der Rotationsübertragung.

In nicht dargestellter Weise ist an dem in Rotation mitgenommenen Gehäuse 41 ein Lüfter für den Kühler eines Fahrzeugs montiert.

Entsprechend Fig. 2 ist in Fig. 3 der Frontteil 21b des Kupplungs-Schafts 21 dargestellt, dessen axial durch den erfindungsgemässen Aktuator bewegliche Hülse 22 mit einem Ende eines Ventilarm 43 verbunden, wobei dieser Ventilarm an seinem anderen Ende einen Fortsatz (53) aufweist, mit dessen Hilfe bei der Bewegung des Ventilarms eine Ölauslassbohrung 52 mehr oder weniger geöffnet werden kann um damit die Ölmenge im Scherungsbereich zu beeinflussen.

Die Viskosekupplung der Fig. 3 weist ferner noch einen Anschlag 51 zur Mitnahme der Primärscheibe 42 durch den Kupplungs-Schaft 21, eine Anschlaghülse 40 für den Frontteil 21b und somit für den Ventilhebel 43 sowie einen Deckel für das Ölreservoir auf, deren Funktionen selbstverständlich sind und hier nicht näher erläutert werden müssen.

Die Erfindung wurde an Hand von zwei nicht limitierenden Ausführungsbeispielen erläutert.

## Patentansprüche

1. Viskosekupplung mit einem Aktuator zum Ansteuern beispielsweise eines Ventils zur Steuerung des Öldurchsatzes der Viskosekupplung, wobei dieser Aktuator funktionell mit einem rotierenden Teil (1; 21) der Viskosekupplung, wie beispielweise dem Kupplungs-Schaft, zusammenarbeitet, und wobei der Aktuator einen Primäraktuator (7; 24) aufweist, der mittels eines, eine relative Verdrehung des Primäraktuators zum Kupplungs-Schaft (1; 21) oder dgl. gestattenden Lagers (13; 29) an dem Kupplungs-Schafts oder dgl. gelagert ist, wobei der Kupplungs-Schaft (1; 21) oder dgl. einen hohlzylindrischen Bereich aufweist, **dadurch gekennzeichnet, dass** der Primäraktuator (7; 24) innerhalb dieses hohlzylindrischen Bereichs angeordnet ist, wobei Aktuator und Kupplungs-Schaft oder dgl. Mittel (1a, 3, 4, 5, 8, 9) aufweisen um die Steuertätigkeit des Primäraktuators von innerhalb des hohlzylindrischen Bereichs nach aussen mitzuteilen, und wobei eine Hülse (4; 22) vorgesehen ist, welche durch die Wirkung des Aktuators (7; 24) ausserhalb des Kupplungs-Schafts (1; 21) auf diesem axial gleitend, verschiebbar ist.

2. Viskosekupplung nach Anspruch 1, **dadurch gekennzeichnet, dass** der Primäraktuator eine Magnetspule (7; 24) umfasst.

3. Viskosekupplung nach Anspruch 2, **dadurch gekennzeichnet, dass** Bereiche des Kupplungs-Schafts (1, 3) und die bewegliche Hülse (4) Teil des Magnetkreises der Magnetspule (7) sind.

4. Viskosekupplung nach Anspruch 3, **dadurch gekennzeichnet, dass** die Magnetspule (7; 24) auf einer stationären Spulenachse (8; 25) gelagert ist und dass die Aussenkontur der Spulenachse (8; 25) die Innenkontur eines Kugellagers (13; 29) trägt, welches mit seiner Aussenkontur an der Innenfläche des hohlzylindrischen Kupplungs-Schafts (1; 21) anliegt, um derart eine relative Rotation zwischen Spulenachse und Kupplungs-Schaft zu gewährleisten.

5. Viskosekupplung nach Anspruch 3 oder 4, **dadurch gekennzeichnet, dass** der Kupplungs-Schaft (1) einen hohlzylindrischen Hauptschaft (1) aus ferromagnetischem Material, einen topfförmigen Schaftfrontteil (3) aus ferromagnetischem Material und einen unmagnetischen Zwischenteil (2)umfasst, welcher axial zwischen Hauptteil und Schaffrontteil angeordnet ist.

6. Viskosekupplung nach Anspruch 2, **dadurch gekennzeichnet, dass** die besagte Hülse (4) ausserhalb dieses Hohlzylinders derart angeordnet ist, dass sie den unmagnetischen Teil (2) überspannt wobei sie in einer ihrer Endpositionen eine starke Überlappung mit einem der beiden ferromagnetischen Teile (3) und eine schwache oder keine Überlappung mit dem anderen der beiden ferromagnetischen Teile (1a) aufweist, wohingegen sie in der anderen Endposition mit beiden ferromagnetischen Teilen (3, 1a) des Kupplungs-Schafts im wesentlichen gleich starke Überlappungen aufweist.

7. Viskosekupplung nach Anspruch 5 oder 6, **dadurch gekennzeichnet, dass** Hauptschaft (1a), Zwischenteil (2) und Schaftfrontteil (3) miteinander verschraubt oder verschweisst sind.

8. Viskosekupplung nach einem der Ansprüche 1-4, **dadurch gekennzeichnet, dass** die bewegliche Hülse aus einem topfförmigen, mit seinem hülsenförmigen Bereich (22) den zylindrischen Teil (21a) des Kupplungs-Schafts (21) umschliessenden Schaftfrontteil (21b) gebildet ist.

9. Viskosekupplung nach einem der vorhergehenden Ansprüche, **dadurch gekennzeichnet, dass** die bewegliche Hülse (4; 21b) mittels einer Feder (31) in einen von zwei Endpositionen vorgespannt ist.

## Claims

1. Viscosity clutch including an actuator for actuating, for example, a valve for controlling the oil throughput of the viscosity clutch, this actuator cooperating functionally with a rotating part (1; 21) of the viscosity clutch, such as, for example, the clutch shaft, and the actuator having a primary actuator (7; 24) which is mounted by means of a bearing (13; 29) permitting a rotation of the primary actuator relative to the clutch shaft (1; 21) or the like on the clutch shaft or the like, whereby the clutch shaft (1; 21) or the like has a hollow cylindrical region, **characterized in that** the primary actuator (7; 24) is arranged inside this hollow cylindrical region, actuator and clutch shaft or the like having means (1a, 3, 4, 5, 8, 9) for communicating the control activity of the primary actuator from inside the hollow cylindrical region to the outside, a sleeve (4; 22) being provided which, by the effect of the actuator (7; 24) is movable outside of the clutch shaft, axially sliding thereon.

2. Viscosity clutch according to Claim 1, **characterized in that** the primary actuator comprises a solenoid coil (7; 24).

3. Viscosity clutch according to Claim 2, **characterized in that** regions of the clutch shaft (1; 3) and the moveable sleeve (4) are part of the magnetic loop of the solenoid coil (7).

4. Viscosity clutch according to Claim 3, **characterized in that** the solenoid coil (7; 24) is mounted on a stationary coil axle (8; 25) and that the outer contour of the coil axle (8; 25) carries the inner contour of a ball bearing (13; 29) which rests with its outer contour on the inner surface of the hollow cylindrical clutch shaft (1; 21) in order thus to ensure a relative rotation between coil axle and clutch shaft.

5. Viscosity clutch according to Claim 3 or 4, **characterized in that** the clutch shaft (1) comprises a hollow cylindrical main shaft (1) of ferromagnetic material, a pot-like shaft front part (3) of ferromagnetic material and a nonmagnetic intermediate part (2) which is arranged axially between main part and shaft front part.

6. Viscosity clutch according to Claim 2, **characterized in that** said sleeve (4) is arranged outside this hollow cylinder in such a way that it extends over the nonmagnetic part (2), and, in one of its end positions, it has a considerable overlap with one of the two ferromagnetic parts (3) and little or no overlap with the other of the two ferromagnetic parts (1a), whereas, in the other end position, it has substantially equal overlaps with both ferromagnetic parts (3, 1a) of the clutch shaft.

7. Viscosity clutch according to Claim 5 or 6, **characterized in that** main shaft (1a), intermediate part (2) and shaft front part (3) are screwed or welded to one another.

8. Viscosity clutch according to any of Claims 1-4, **characterized in that** the moveable sleeve is formed by a pot-like shaft front part (21b) whose sleeve-like region (22) encloses the cylindrical part (21a) of the clutch shaft (21).

9. Viscosity clutch according to any of the preceding Claims, **characterized in that** the moveable sleeve (4; 21b) is pretensioned by means of a spring (31) in one of two end positions.

## Revendications

1. Embrayage à fluide visqueux, comprenant un actionneur pour la commande, par exemple, d'une soupape pour la commande du débit d'huile de l'embrayage à fluide visqueux, cet actionneur coopérant fonctionnellement avec une partie rotative (1; 21) de l'embrayage à fluide visqueux, tel que, par exemple, l'arbre d'embrayage, et l'actionneur présentant un actionneur primaire (7; 24) monté sur l'arbre d'embrayage ou analogue, au moyen d'un palier (13; 29), permettant une rotation relative de l'actionneur primaire par rapport à l'arbre d'embrayage (1; 21) ou analogue, l'arbre d'embrayage (1; 21) ou analogue présentant une zone cylindrique creuse, **caractérisé en ce que** l'actionneur primaire (7; 24) est disposé à l'intérieur de cette zone cylindrique creuse, l'actionneur et l'arbre d'embrayage ou analogue, présentant des moyens (1a, 3, 4, 5, 8, 9), pour communiquer l'activité de commande de l'actionneur primaire depuis l'intérieur de la zone cylindrique creuse vers l'extérieur, et une douille (4; 22) étant prévue, déplaçable sous l'effet de l'actionneur (7; 24) hors de l'arbre d'embrayage (1; 21), en coulissant axialement sur celui-ci.

2. Embrayage à fluide visqueux selon la revendication 1, **caractérisé en ce que** l'actionneur primaire comprend une bobine magnétique (7; 24).

3. Embrayage à fluide visqueux selon la revendication 2, **caractérisé en ce que** des zones de l'arbre d'embrayage (1, 3) et la douille mobile (4) font partie du circuit magnétique de la bobine magnétique (7).

4. Embrayage à fluide visqueux selon la revendication 3, **caractérisé en ce que** la bobine magnétique (7; 24) est montée sur un axe de bobine (8; 25) stationnaire, et **en ce que** le contour extérieur de l'axe de bobine (8; 25) porte le contour intérieur d'un roulement à billes (13; 29) qui, par son contour extérieur, appuie sur la face intérieure de l'arbre d'embrayage (1; 21) cylindrique creux, pour assurer de cette manière une rotation relative entre l'axe de bobine et l'arbre d'embrayage.

5. Embrayage à fluide visqueux selon la revendication 3 ou 4, **caractérisé en ce que** l'arbre d'embrayage (1) comprend un arbre principal (1) cylindrique creux, formé d'un matériau ferromagnétique, une partie avant d'arbre (3) en forme de pot réalisée en un matériau ferromagnétique et une partie intermédiaire (2) non magnétique, disposée axialement entre la partie principale et la partie avant d'arbre.

6. Embrayage à fluide visqueux selon la revendication 2, **caractérisé en ce que** ladite douille (4) est disposée à l'extérieur de ce cylindrique creux, de manière qu'elle entoure la partie (2) non magnétique, sachant que, en l'une de ses positions finales, elle présente un fort chevauchement avec l'une des deux parties ferromagnétiques (3) et un faible chevauchement ou pas de chevauchement avec l'autre des deux parties ferromagnétiques (1a), alors que, par contre, à l'autre position finale, elle présente, avec les deux parties ferromagnétiques (3, 1a) de l'arbre d'embrayage, des chevauchements sensiblement de même valeur.

7. Embrayage à fluide visqueux selon la revendication 5 ou 6, **caractérisé en ce que** l'arbre principal (1), l'arbre intermédiaire (2) et la partie avant d'arbre (3) sont vissés ou soudés ensemble.

8. Embrayage à fluide visqueux selon l'une des revendications 1 à 4, **caractérisé en ce que** la douille mobile est formée d'une partie avant d'arbre (21b) en forme de pot, entourant, par sa zone (22) en forme de douille, la partie cylindrique (21a) de l'arbre d'embrayage (21).

9. Embrayage à fluide visqueux selon l'une des revendications précédentes, **caractérisé en ce que** la douille mobile (4; 21b) est précontrainte en l'une de deux positions finales à l'aide d'un ressort (31).
